# FASCICULE DE BREVET EUROPEEN

(11) **EP 0 838 697 B1**
(45) Date de publication et mention de la délivrance du brevet: **07.04.2004**
(21) Numéro de dépôt: 97203279.1
(22) Date de dépôt: 23.10.1997
(51) Int. Cl.: G01V 3/08, B60R 21/01

(54) **Dispositif de sondage d'un corps conducteur et son application à la commande d'un système airbag d'un véhicule**
Detektionsvorrichtung für einen leitfähigen Körper und Anwendung in einer Fahrzeug-Airbagsteuervorrichtung
Apparatus for probing a conductive body and its application in a vehicle-airbag control system

(30) Priorité: 25.10.1996 LU 88828; 25.10.1996 LU 88829; 07.03.1997 LU 90035
(43) Date de publication de la demande: 29.04.1998
(73) Titulaire: I.E.E. International Electronics & Engineering S.à.r.l., L-2632 Luxembourg (LU)
(72) Inventeur: Schoos, Aloyse, 8094 Bertrange (LU); Goniva, Thierry, 2141 Luxembourg (LU); Witte, Michel, 8077 Bertrange (LU); Lamesch, Laurent, 4881 Lamadeleine (LU)
(74) Mandataire: Meyers, Ernest

(56) Documents cités:
- WO-A-97/29391
- GB-A- 2 286 247
- US-A- 4 532 501
- PATENT ABSTRACTS OF JAPAN vol. 006, no. 175 (P-141), 9 septembre 1982 (1982-09-09) & JP 57 091478 A (MATSUSHITA ELECTRIC WORKS LTD), 7 juin 1982 (1982-06-07)
- PATENT ABSTRACTS OF JAPAN vol. 007, no. 042 (P-177), 19 février 1983 (1983-02-19) & JP 57 194370 A (SHARP KK), 29 novembre 1982 (1982-11-29)

## Description

La présente invention concerne un dispositif de sondage d'un corps conducteur comprenant au moins deux électrodes émettrices et une électrode réceptrice.

L'augmentation croissante du nombre d'équipements d'airbag dans les véhicules a permis de recueillir un grand nombre d'informations sur le fonctionnement des airbags, ce qui a contribué largement à leur perfectionnement et à l'amélioration de la sécurité qu'ils peuvent procurer. L'un de ceux-ci consiste à soumettre le fonctionnement de l'airbag à une unité de commande intelligente qui est alimentée par différents détecteurs afin d'adapter le déploiement de l'airbag aux circonstances particulières.

Il a notamment été constaté que le déploiement d'un airbag peut être très dangereux pour un passager lorsque celui-ci occupe une position autre que sa position dite normale. Il faut, en effet, savoir qu'un airbag se déploie en forme de champignon avec un brusque jaillissement longitudinal suivi d'un gonflement latéral. Or, si la tête du passager, par exemple, se trouve trop près de la cassette de l'airbag, donc dans le champ de déploiement de l'airbag, notamment dans la trajectoire du jaillissement initial, l'effet de l'airbag peut être plus néfaste que bénéfique.

Par ailleurs, de nouveaux générateurs de gaz ont été proposés ou sont à l'étude pour permettre, à l'avenir, un fonctionnement à plusieurs niveaux et un déploiement modulé et plus nuancé qu'un tout ou rien, notamment pour tenir compte de la masse d'inertie du passager ou de sa position. Or, pour pouvoir profiter pleinement de ces nouvelles possibilités, il est essentiel de pouvoir déterminer le plus précisément et le plus rapidement possible la position instantanée du passager afin d'adapter le déploiement de l'airbag aux circonstances particulières. La position et le suivi du mouvement d'un passager sont donc des paramètres déterminants pour la commande du déploiement de l'airbag.

Les documents GB-A-2 286 247 et JP 57 194370 décrivent un dispositif de sondage d'un corps conducteur comprenant une électrode émettrice et une électrode réceptrice qui fonctionnent par couplage capacitif notamment avec le corps conducteur. L'électrode réceptrice est connectée à un circuit de réception qui permet d'évaluer le couplage capacitif du corps avec lesdites électrodes par comparaison de signaux.

Le document US-A-4 532 501 décrit un dispositif de sécurité pour un outil de travail avec une antenne de transmission et une antenne de réception permettant d'évaluer n'importe quel changement de l'impédance entre ces deux unités grâce à un circuit d'analyse qui permet d'analyser un changement du signal reçu par comparaison de celui-ci avec un signal de référence.

Le but de la présente invention est de prévoir un nouveau dispositif de sondage d'un corps conducteur qui permet de déterminer de manière fiable sa position ainsi que son application à la surveillance fiable de la position d'un passager d'un véhicule pour adapter le moment et l'intensité du déploiement de l'airbag à la position exacte du passager.

Pour atteindre cet objectif, la présente invention prévoit un dispositif de sondage selon la revendication 1.

Le dispositif peut fonctionner de manière indépendante en mode capacitif pour sonder la personne assise sur le siège du passager, par exemple détecter sa taille, sa position, ses mouvements etc. pour moduler le déploiement éventuel de l'airbag en fonction de ces paramètres.

Il se peut que dans un tel dispositif, il se présente au niveau du récepteur le problème de la distinction entre les champs électromagnétiques générés par un émetteur de système par rapport aux :
a) autres émetteurs du même système,
b) émetteurs d'un deuxième système situé à proximité
c) bruits et aux parasites électromagnétiques de l'environnement.

Pour résoudre ce problème l'invention prévoit selon un mode de réalisation avantageux une modulation par des séquences binaires pseudo-aléatoires des champs électromagnétiques émis.

Les distinctions par rapport à a) et b) sont généralement réalisées par un décalage dans le temps ou en fréquence des signaux des différents émetteurs.

Une méthode avantageuse consiste à moduler, de façon cyclique ou répétitive, une séquence sur le champ électromagnétique produit, la séquence étant unique pour chacun des émetteurs. Cette séquence est suffisamment longue pour qu'elle se distingue de celle des autres émetteurs et des parasites externes. Dans ce cas, il est possible d'utiliser la même fréquence de la porteuse et le même cycle temporel pour les différents émetteurs.

La séquence peut être binaire afin de simplifier les circuits électroniques. Le choix, pour chaque émetteur, d'une séquence binaire orthogonale par rapport à celle des autres émetteurs permet de séparer les signaux des différents émetteurs s'ils sont captés simultanément par le même récepteur.

Il existe des séquences binaires pseudo-aléatoires qui remplissent la condition d'orthogonalité et permettent donc de distinguer les signaux provenant d'une multitude d'émetteurs modulés par de telles séquences.

De telles séquences peuvent être générées par des registres à décalage alimentés par un retour de plusieurs bits de la séquence par une porte ou-exclusive. Une alternative consiste à programmer les séquences dans des mémoires digitales et de les lire de façon cyclique.

Cette méthode permet aussi de réduire considérablement la densité spectrale de l'émission et d'améliorer la sélectivité des récepteurs par rapport aux parasites. Ceci vaut aussi dans le cas de l'utilisation d'un seul émetteur et d'une seule séquence de modulation.

Si le dispositif de sondage décrit ci-dessus qui est en fait un dispositif statique permet de déterminer avec une précision relativement bonne la position statique du passager, il peut arriver qu'il ne soit pas assez rapide pour déterminer la position du passager au moment d'un choc, car souvent la position du passager change durant le laps de temps qui précède le choc, par exemple suite à un freinage brusque du véhicule ou un mouvement réflexe du passager.

Pour combler cette lacune, l'invention prévoit dans un mode de réalisation avantageux de combiner le dispositif de sondage statique décrit ci-dessus avec un détecteur de déplacement dynamique du passager.

Le détecteur pour le déplacement dynamique peut utiliser le décalage de la fréquence d'une onde réfléchie par le corps du passager en mouvement.

Une onde réfléchie peut, en effet, par interférence avec l'onde émise générer des basses fréquences proportionnelles à la vitesse de déplacement du corps de réflexion par rapport au récepteur-émetteur de cette onde. On peut décrire le même phénomène par le décalage Doppler de la fréquence de l'onde réfléchie par le corps en mouvement. Le récepteur produit la différence entre la fréquence émise et la fréquence de l'onde captée qui vient du réflecteur.

Ce principe ne produit qu'un faible signal pour un déplacement lent mais un signal puissant pour un déplacement relatif rapide. Ce principe est donc idéal pour suivre les déplacements rapides, c'est-à-dire qui sont trop rapides pour le principe de mesure de la position statique. On peut choisir la fréquence émise de manière à ce que, même pendant les déplacements plus rapides, les fréquences résultantes dans le récepteur restent assez basses pour être traitées par un microprocesseur peu coûteux.

Par intégration du signal basse fréquence généré par ce principe de mesure dynamique, on obtient le déplacement depuis la dernière position obtenue par le principe de mesure statique. Ainsi, ce mode de réalisation de la présente invention propose de combiner deux principes pour suivre en temps réel la progression dynamique du passager et fournir ainsi des informations précises et rapides sur la position du passager qui permettent un déploiement de l'airbag en toute sécurité. La combinaison de ces deux techniques est moins coûteuse qu'une seule technique assez rapide pour suivre la position du passager en temps réel.

Pour le principe de mesure dynamique, on peut utiliser des micro-ondes générées par un émetteur à très faible puissance. Même lors des plus fortes accélérations du mouvement du passager, la basse fréquence résultante dans le récepteur est de l'ordre du kHz et facile à traiter par microprocesseur. Le traitement le plus simple consiste à compter le nombre de cycles d'ondes de la basse fréquence engendrée par le récepteur, ce nombre étant proportionnel au déplacement, par exemple un cycle d'ondes peut correspondre à 15 mm de déplacement.

Il est par ailleurs possible de recueillir des signaux correspondant à la vitesse de déplacement du passager par rapport au centre de déploiement de l'airbag, ce qui fournit un autre paramètre utile pour l'ordinateur de commande de l'airbag.

Il est également possible d'activer le ou les capteur(s) pour le suivi dynamique du mouvement du passager seulement en cas de besoin. Ceci peut se faire soit par des accéléromètres qui constatent le dépassement d'une accélération minimale, soit par capteurs de proximité dans le dos du siège qui constatent que le passager vient de quitter sa position de repos.

D'autres particularités de l'invention ressortiront de la description détaillée des quelques modes de réalisation préférés présentés ci-dessous, à titre d'illustration, en référence aux figures annexées dans lesquelles :
la figure 1 est un schéma synoptique illustrant le principe de fonctionnement du dispositif selon la présente invention;
la figure 2 est un schéma synoptique du circuit émetteur selon la présente invention;
la figure 3 est un schéma synoptique du circuit récepteur selon la présente invention ;
la figure 4 montre un schéma synoptique d'une variante d'un générateur de champ électromagnétique;
la figure 5 montre un schéma synoptique d'une variante d'un récepteur de champ électromagnétique et
la figure 6 montre un schéma de principe d'un détecteur dynamique pouvant être associé à un dispositif de sondage statique.

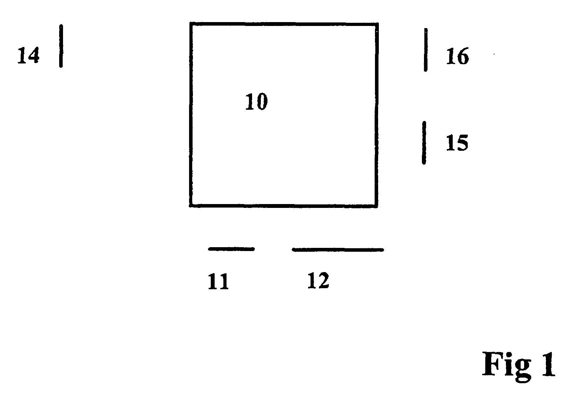

La présente invention consiste à effectuer un sondage capacitif selon le schéma de la figure 1. La référence 10 représente schématiquement un corps conducteur à sonder, par exemple pour déterminer sa position et/ou sa taille. Le principe de détection ou de sondage est basé sur le couplage capacitif de plusieurs électrodes d'émission 11, 12 au corps 10 et le couplage de celui-ci à une ou plusieurs électrodes réceptrices 14, 15 et 16.

Le signal émis, par exemple par l'électrode 11 est capté par les électrodes 14, 15 et 16 avec une intensité qui est fonction de la distance entre le corps 10 et l'électrode 11 d'une part et les électrodes 14, 15 et 16 d'autre part. Par ailleurs, en modifiant les dimensions des électrodes, on peut varier la caractéristique de l'intensité du signal en fonction de la distance entre le corps et l'électrode. Par exemple, en utilisant une électrode 11 avec une surface qui est grande par rapport à la surface de l'électrode 16, l'intensité varie fortement avec la distance entre cette électrode 16 et le corps 10 et varie peu avec la distance entre la grande électrode 11 et le corps 10.

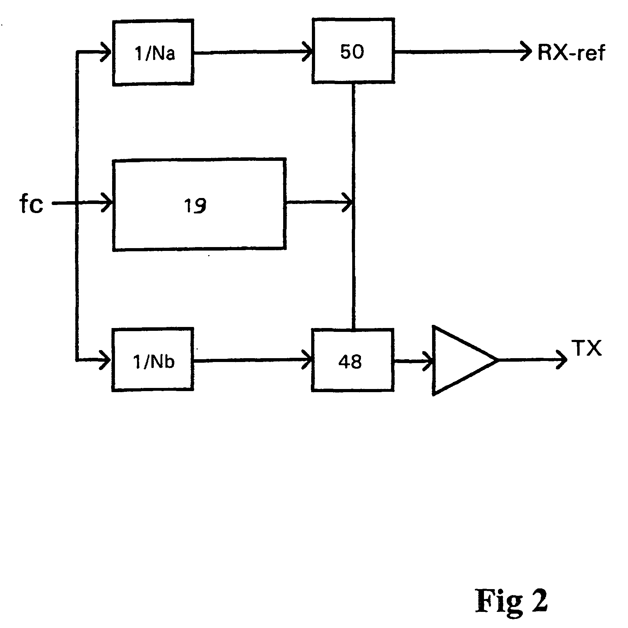

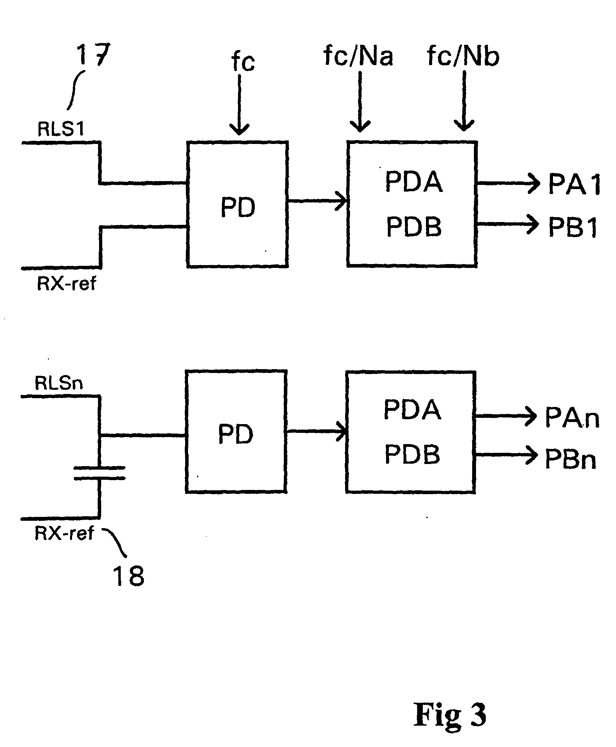

La figure 2 montre le circuit émetteur selon la présente invention pour effectuer un sondage capacitif selon la figure 1. Une onde porteuse fc alimente une électrode émettrice TX en courant sinusoïdal à travers un convertisseur sinusoïdal 19 et un amplificateur. La même porteuse fc commande les démodulateurs synchrones PD de deux circuits de réception 17 et 18 (voir fig. 3).

La porteuse fc, après division par les facteurs Na et Nb dans les diviseurs de fréquence 1/Na et 1/Nb commande une seconde série de démodulateurs synchrones PDA et PDB dans les deux circuits de réception 17 et 18 (fig. 3)

En plus de la tension pour l'antenne d'émission modulée en phase dans le modulateur 48 par la sous-porteuse fc/Nb l'émetteur génère aussi un signal de référence RX-ref modulé en phase dans le modulateur 50 par la sous-porteuse fc/Na.

La figure 3 montre le circuit récepteur selon la présente invention pour effectuer un sondage capacitif selon la figure 1. Il y a n circuits de réception 17 à 18 comprenant chacun un premier démodulateur synchrone PD commandé par la porteuse fc et des seconds démodulateurs synchrones PDA et PDB commandés par les sous-porteuses fc/Na et fc/Nb.

Les entrées des récepteurs 17 et 18 sont connectées selon la figure 3 sur des électrodes capacitives RLS1 à RLSn.

Les entrées des récepteurs 17 et 18 sont également connectées sur le signal de référence RX-ref généré par l'émetteur de la figure 2. Ce signal de référence peut être ajouté soit sur l'entrée différentielle du récepteur (voir récepteur 17) RLS1, soit alimenter un diviseur capacitif (voir récepteur 18) contenant l'électrode de réception RLSn. Pour évaluer le couplage capacitif avec le corps conducteur à sonder on compare l'amplitude de la modulation de phase PA1 à PB1 et, plus généralement, PAn à PBn. Ce rapport est fonction de la distance des électrodes TX et RLSn au corps à sonder et de sa taille.

Dans le cas de deux électrodes émettrices, la distinction peut être facilitée en générant des champs électriques alternatifs qui peuvent être soit décalés dans le temps, soit avoir des fréquences différentes ou être modulés par des sous-porteuses différentes.

Il est par ailleurs possible de prévoir un système de surveillance de l'intégrité des électrodes, par exemple détection d'une rupture d'un conducteur, par du courant continu.

La surveillance de l'intégrité des électrodes réceptrices peut également être effectuée par couplage capacitif d'un signal de référence qui doit traverser l'électrode avant d'atteindre le récepteur.

Il est possible d'émettre et de recevoir sur une même électrode de la figure 1. Ceci peut se faire simultanément grâce à la modulation des signaux d'émission par des séquences orthogonales.

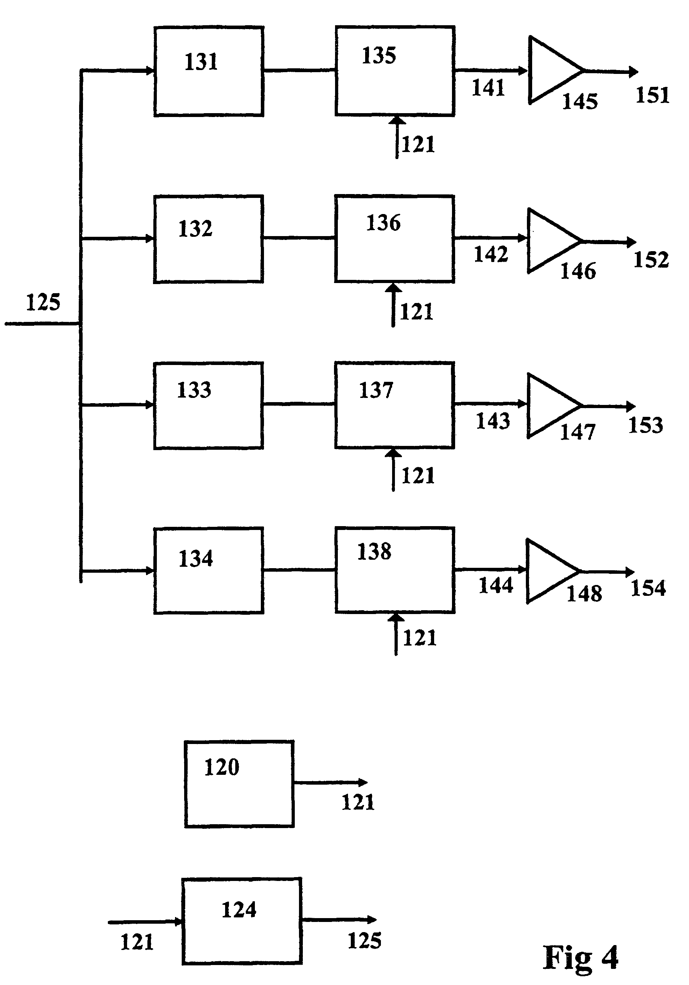

La figure 4 montre un générateur 120 qui produit une fréquence porteuse 121 qui peut éventuellement servir à synchroniser plusieurs ensembles de capteurs situés à des distances trop faibles pour ne pas interférer sans synchronisation. Un ensemble de, par exemple, quatre générateurs de séquences 131, 132, 133, 134 sont alimentés par une fréquence horloge 125 qui est synchronisée avec la porteuse 121.

Cette synchronisation peut se faire par un simple diviseur numérique 124 qui est alimenté par la porteuse 121.

Les générateurs de séquences 131, 132, 133 et 134 produisent des séquences différentes pour chacun des modulateurs 135, 136, 137 et 138 qui produisent ainsi des signaux d'émission 141, 142, 143 et 144 différents par leurs modulations respectives sur la base de la porteuse 121. Une série d'amplificateurs 145, 146, 147 et 148 mettent ces signaux 151, 152, 153 et 154 à la disposition des électrodes 11, 12, etc. avec une impédance de sortie suffisamment basse pour pouvoir alimenter des capacités.

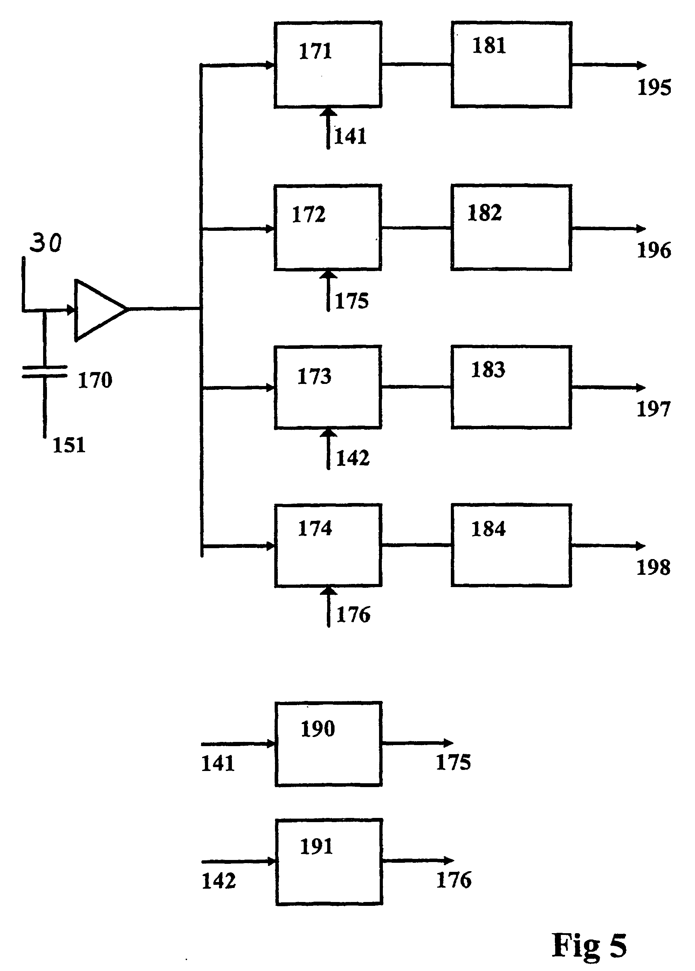

La figure 5 montre une partie d'un seul récepteur parmi les multiples récepteurs de champs électromagnétiques. Le signal capté par une électrode 30 est réparti en parallèle sur un ensemble de démodulateurs synchrones 171, 172, 173 et 174. Chaque démodulateur synchrone est, de plus, alimenté par le signal d'un émetteur 141, 142 ou par ce signal décalé de 90 degrés 175, 176. Les éléments 190 et 191 symbolisent ce déphasage. Les signaux démodulés sont filtrés par les filtres passe-bas 181, 182, 183 et 184 et la tension résultante est proportionnelle à l'amplitude de la partie du signal capté attribué à l'émetteur respectif 151, 152, 153 et 154.

Les tensions ainsi obtenues 195, 196, 197 et 198 sont digitalisées et évaluées par un micro-ordinateur qui dispose ainsi des valeurs numériques des amplitudes des signaux des N émetteurs de champs électromagnétiques captés par les M récepteurs. L'amplitude du signal en phase avec un émetteur spécifique ensemble avec l'amplitude du signal déphasé de 90° permet une analyse vectorielle du signal capté. Le micro-ordinateur dispose donc de M fois N, respectivement M fois 2N valeurs pour son évaluation de l'objet conducteur.

A l'entrée du récepteur, l'électrode 30 peut faire partie d'un diviseur de tension capacitif avec la capacité de référence fixe et connue 170 qui est alimentée par un signal d'émission 151 modulé par une séquence telle que décrite. La comparaison de l'amplitude des signaux captés par rapport à cette capacité permet d'évaluer les signaux captés par rapport à cette capacité de référence et même de considérer, par le micro-ordinateur, les effets des variations de la capacité de l'électrode de réception.

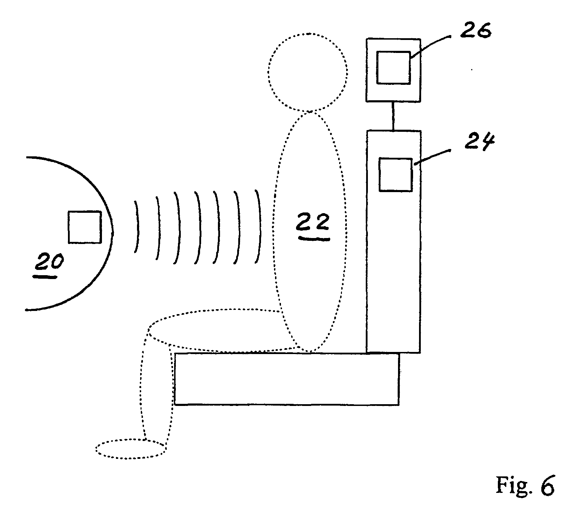

La figure 6 en annexe montre, à titre d'illustration, un schéma de principe d'un détecteur dynamique pouvant être associé au dispositif de sondage décrit ci-dessus. Dans la cassette de l'airbag 20 ou à proximité de celle-ci sont installés un ou plusieurs détecteurs et émetteurs de micro-ondes qui envoient un faisceau divergent en direction du corps d'un passager 22 et captent les ondes renvoyées par celui-ci. Des émetteurs-détecteurs peuvent également être disposés dans le dos du siège 24 ou dans l'appui-tête 26 et opérer seul ou en association avec des émetteurs-détecteurs disposés dans la cassette de l'airbag 20. Lorsque plusieurs émetteurs-détecteurs opèrent en association on peut les combiner avantageusement pour qu'ils effectuent un contrôle mutuel des mesures, ce qui augmente leur fiabilité et renforce la sécurité.

Les détecteurs disposés dans le dos du siège 24 ou dans l'appui-tête 26 utilisent le dos et/ou la tête du passager comme réflecteur(s) et peuvent présenter l'avantage que ces parties du passager ne sont généralement pas cachées par des mains ou des objets en mouvement.

## Revendications

1. Dispositif de sondage conçu pour pouvoir sonder un corps conducteur, ledi dispositif comprenant au moins un circuit émetteur et un circuit récepteur lequel comporte au moins une électrode réceptrice (14, 15, 16) les deux circuits pouvant être disposés en relation de couplage capacitif avec ledit corps conducteur, dans lequel le circuit récepteur (17, 18) permet d'évaluer le couplage capacitif dudit corps avec le circuit émetteur et le circuit récepteur par comparaison d'un signal de mesure et d'un signal de référence, **caractérisé en ce que** le circuit émetteur comporte au moins deux électrodes émettrices (11, 12, TXn) alimentées par une tension alternative modulée en phase par une première sous-porteuse (fc/Nb) générée par un émetteur du dispositif et qui génère également un signal modulé en phase par une seconde sous-porteuse (fc/Na) distincte de la première et constituant le signal de référence pour chaque circuit récepteur (17, 18).

2. Dispositif selon la revendication 1, **caractérisé en ce que** les deux électrodes émettrices (TXn) génèrent des champs électriques alternatifs décalés dans le temps.

3. Dispositif selon la revendication 1, **caractérisé en ce que** les deux électrodes émettrices (TXn) génèrent des champs électriques alternatifs avec des fréquences différentes.

4. Dispositif selon la revendication 3, **caractérisé en ce que** les sous-porteuses sont synchronisées avec le champ électrique alternatif.

5. Dispositif selon la revendication 3, **caractérisé en ce que** les sous-porteuses sont obtenues par division de la fréquence du champ électrique alternatif.

6. Dispositif selon l'une quelconque des revendications 1 à 5 **caractérisé par** une modulation par des séquences binaires pseudo-aléatoires des champs électromagnétiques émis.

7. Dispositif selon la revendication 6, **caractérisé en ce que** la modulation est une modulation de phase.

8. Dispositif selon la revendication 6, **caractérisé en ce que** la modulation est réalisée par un déphasage de 180°.

9. Application d'un dispositif de sondage selon l'une quelconque des revendications 1 à 8 à la surveillance de la position d'un passager d'un véhicule automobile par rapport à la zone de déplacement d'un airbag associé au siège de ce passager et en vue de la commande du déploiement de cet airbag.

10. Application selon la revendication 9 **caractérisé en ce que** le dispositif de sondage est combiné avec au moins un détecteur de déplacement dynamique de l'occupant.

11. Application selon la revendication 10, **caractérisé en ce que** le détecteur du déplacement dynamique utilise le décalage de la fréquence d'une onde réfléchie par le corps du passager en mouvement.

12. Application selon l'une quelconque des revendications 10 ou 11, **caractérisé en ce que** le suivi de la position du corps du passager, en déplacement rapide, est réalisé en rajoutant le déplacement dynamique à la dernière position statique détectée.

13. Application selon l'une quelconque des revendications 10 à 12, **caractérisé en ce que** la mesure dynamique est réalisée à partir du tableau de bord du véhicule.

14. Application selon l'une quelconque des revendications 10 à 12, **caractérisé en ce que** la mesure dynamique est réalisée à partir du dos du siège ou de son appuie-tête.

## Patentansprüche

1. Detektionsvorrichtung, welche ausgebildet ist, um einen leitenden Körper abzutasten, wobei die Vorrichtung wenigstens eine Sendeschaltung und eine Empfangsschaltung mit wenigstens einer Empfangselektrode (14, 15, 16) aufweist und wobei die beiden Schaltungen in kapazitiver Kopplung mit dem leitenden Körper angeordnet werden können, in welcher die Empfangsschaltung (17, 18) die kapazitive Kopplung des Körpers mit der Sendeschaltung und der Empfangsschaltung durch Vergleich eines Messsignals und eines Referenzsignals abschätzen kann, **dadurch gekennzeichnet, dass** die Sendeschaltung wenigstens zwei Sendeelektroden (11, 12) (TXn) aufweist, welche von einer von einem Sender der Vorrichtung erzeugten ersten Hilfsträgerin (fc/Nb) phasemodulierten Wechselspannung gespeist werden und das die Vorrichtung ebenfalls ein von einer zweiten sich von der ersten unterscheidenden Hilfsträgerin (fc/Na) phasemoduliertes Signal erzeugt, welches das Referenzsignal für jede (17, 18) bildet.

2. Detektionsvorrichtung nach Anspruch 1, **dadurch gekennzeichnet, dass** die beiden Sendeelektroden (TXn) zeitversetzte elektrische Wechselfelder erzeugen.

3. Detektionsvorrichtung nach Anspruch 1, **dadurch gekennzeichnet, dass** die beiden Sendeelektroden (TXn) elektrische Wechselfelder mit verschiedenen Frequenzen erzeugen.

4. Detektionsvorrichtung nach Anspruch 3, **dadurch gekennzeichnet, dass** die Hilfsträger mit dem elektrischen Wechselfeld synchronisiert sind.

5. Detektionsvorrichtung nach Anspruch 3, **dadurch gekennzeichnet, dass** die Hilfsträger durch Teilung der Frequenz des elektrischen Wechselfeldes entstehen.

6. Detektionsvorrichtung nach einem der Ansprüche 1 bis 5, **gekennzeichnet durch** eine Modulation der pseudozufälligen binären Sequenzen der erzeugten elektromagnetischen Felder.

7. Detektionsvorrichtung nach Anspruch 6, **dadurch gekennzeichnet, dass** die Modulation eine Phasenmodulation ist.

8. Detektionsvorrichtung nach Anspruch 6, **dadurch gekennzeichnet, dass** die Modulation durch eine Phasenverschiebung von 180° erzeugt wird.

9. Verwendung einer Detektionsvorrichtung gemäss einem der Ansprüche 1 bis 8 zur Überwachung der Position eines Fahrzeuginsassen in Bezug zum Entfaltungsbereich eines zum Sitz dieses Insassen gehörenden Airbags und zur Steuerung der Entfaltung dieses Airbags.

10. Verwendung nach Anspruch 9, **dadurch gekennzeichnet, dass** die Detektionsvorrichtung mit wenigstens einem Detektor der dynamischen Bewegung des Insassen kombiniert ist.

11. Verwendung nach Anspruch 10, **dadurch gekennzeichnet, dass** der Detektor der dynamischen Bewegung die Verschiebung der Frequenz der reflektierten Welle durch den sich bewegenden Körper des Insassen.

12. Verwendung nach einem der Ansprüche 10 oder 11, **dadurch gekennzeichnet, dass** die Überwachung der Position des sich schnell bewegenden Körpers des Insassen durch Hinzufügung der dynamischen Bewegung an die letzte ermittelte statische Position erfolgt.

13. Verwendung nach einem der Ansprüche 10 bis 12, **dadurch gekennzeichnet, dass** die dynamische Messung vom Armaturenbrett des Fahrzeugs aus erfolgt.

14. Verwendung nach einem der Ansprüche 10 bis 12, **dadurch gekennzeichnet, dass** die dynamische Messung vom Sitzrücken oder seiner Kopfstütze aus erfolgt.

## Claims

1. Probing apparatus designed to be able to probe a conducting body, the said apparatus comprising at least one emitter circuit and one receiver circuit which comprises at least one receiver electrode (14, 15, 16), the two circuits being able to be disposed in relation to capacitive coupling with the said conducting body, in which the receiver circuit (17, 18) makes it possible to evaluate the capacitive coupling of the said body with the emitter circuit and the receiver circuit by comparing a measurement signal and a reference signal, **characterized in that** the emitter circuit comprises at least two emitter electrodes (11, 12, TXn) supplied with an AC voltage phase-modulated by a first subcarrier (fc/Nb) generated by an emitter of the apparatus and which also generates a signal phase-modulated by a second subcarrier (fc/Na) separate from the first subcarrier and constituting the reference signal for each receiver circuit (17, 18).

2. Apparatus according to Claim 1, **characterized in that** the two emitter electrodes (TXn) generate time-shifted alternating electric fields.

3. Apparatus according to Claim 1, **characterized in that** the two emitter electrodes (TXn) generate alternating electric fields having different frequencies.

4. Apparatus according to Claim 3, **characterized in that** the subcarriers are synchronized with the alternating electric field.

5. Apparatus according to Claim 3, **characterized in that** the subcarriers are obtained by dividing the frequency of the alternating electric field.

6. Apparatus according to any one of Claims 1 to 5, **characterized by** modulation by pseudo-random binary sequences of the electromagnetic fields emitted.

7. Apparatus according to Claim 6, **characterized in that** the modulation is a phase modulation.

8. Apparatus according to Claim 6, **characterized in that** the modulation is effected by a 180° phase shift.

9. Application of a probing apparatus according to any one of Claims 1 to 8, for the monitoring of the position of a passenger of a motor vehicle with respect to the zone of displacement of an airbag associated with this passenger's seat and with a view to control of the deployment of this airbag.

10. Application according to Claim 9, **characterized in that** the probing apparatus is combined with at least one detector of dynamic displacement of the occupant.

11. Application according to Claim 10, **characterized in that** the detector of the dynamic displacement uses the shift in the frequency of a wave reflected by the body of the moving passenger.

12. Application according to any one of Claims 10 or 11, **characterized in that** the tracking of the position of the body of the passenger, during fast displacement, is effected by adding the dynamic displacement to the last static position detected.

13. Application according to any one of Claims 10 to 12, **characterized in that** the dynamic measurement is effected from the dashboard of the vehicle.

14. Application according to any one of Claims 10 to 12, **characterized in that** the dynamic measurement is effected from the seatback or from its headrest.
